# EUROPÄISCHE PATENTSCHRIFT

(11) **EP 4 068 720 B1**
(45) Veröffentlichungstag und Bekanntmachung des Hinweises auf die Patenterteilung: **21.05.2025**
(21) Anmeldenummer: 21166387.7
(22) Anmeldetag: 31.03.2021
(51) Int. Cl.: G06F 21/45, G06F 21/33, H04L 9/40

(54) **VERFAHREN ZUR ELEKTRONISCHEN VERSENDUNG EINER PERSÖNLICHEN IDENTIFIKATIONSKENNUNG**
METHOD FOR ELECTRONICALLY SENDING A PERSONAL IDENTIFICATION CODE
PROCÉDÉ D'ENVOI ÉLECTRONIQUE D'UN CODE D'IDENTIFICATION PERSONNEL

(43) Veröffentlichungstag der Anmeldung: 05.10.2022
(73) Patentinhaber: SITS Deutschland GmbH, 65187 Wiesbaden (DE)
(72) Erfinder: SCHLOTTKE, Frank, 63762 Grossostheim (DE)
(74) Vertreter: Tergau & Walkenhorst Intellectual Property GmbH

(56) Entgegenhaltungen:
- US-A1- 2018 197 003
- US-A1- 2020 162 457

## Beschreibung

Die Erfindung betrifft ein Verfahren zur Versendung einer persönlichen Identifikationskennung durch einen ersten Server.

Bei zunehmender Digitalisierung werden Informationen, Anträge oder Rechtsgeschäfte elektronisch über Applikation auf elektronischen Endgeräten ausgetauscht bzw. durchgeführt. So stellen Banken und Versicherungen schon seit einiger Zeit für ihre Kunden Applikationen für elektronische Endgeräte zur Verfügung über die die Kunden Informationen, wie beispielsweise Bankauszüge oder bestehende Versicherungspolicen, abrufen können, aber auch neue Anträge stellen oder Überweisungen tätigen können. Zur Sicherheit des Kunden aber auch zur Bestätigung für den Anbieter ist es dabei wichtig, dass sichergestellt wird, dass nur der Kunde selbst Zugriff auf seine persönlichen Daten hat. Aus diesem Grund wird dem Kunden üblicherweise vor der ersten Freischaltung eine persönliche Identifikationskennung, in der Regel als persönliche Identifikationsnummer (PIN), auf dem postalischen Weg übermittelt, mit der er Zugang zu seinen persönlichen Daten erhält. Diese Generierung der persönlichen Identifikationskennung und Zusendung ist aber aufgrund der Übersendung auf dem Postweg sehr zeitintensiv. Insbesondere in den Fällen, in denen die Applikation nicht häufig genutzt wird und der Kunde nur vereinzelt mit dem Unternehmen interagiert, passiert es, dass die Kennung vergessen wird und man erst eine neue Kennung beantragen muss, bevor die gewünschte Interaktion vorgenommen werden kann. Dies bedeutet, dass der Kunde erst ein paar Tage warten muss, bevor er die geplante Aktion ausführen kann.

Allgemeine Authentifizierungsverfahren sind beispielsweise aus den Druckschriften US 2020/162457 A1 und US 2018/197003 A1 bekannt.

Aufgabe der vorliegenden Erfindung ist es daher ein Verfahren zur Versendung einer persönlichen Identifikationskennung durch einen ersten Server anzugeben, das besonders schnell erfolgt und dabei alle vorgeschriebenen Sicherheitsvorgaben erfüllen.

Diese Aufgabe wird im Wesentlichen dadurch gelöst, dass die Kommunikation von der Verifikation des Benutzers, zur Generierung der persönlichen Identifikationskennung und zur Übersendung dieser an den Benutzer rein elektronisch erfolgt, wodurch eine schnelle Bearbeitung ermöglicht wird. Dabei werden die Sicherheitsvorgaben insbesondere dadurch erfüllt, dass eine doppelte und unabhängig voneinander geführte Prüfung und Identifizierung des Benutzers bzw. Antragsstellers der persönlichen Identifikationskennung erfolgt. In einem ersten Schritt werden dabei im Wesentlichen Kundendaten des Benutzers durch die Applikation bzw. dem ersten Server abgefragt und mit einer Kundendaten des Unternehmens verglichen, um zu prüfen, ob die eingegebenen Personendaten eines Benutzers prinzipiell berechtigt sind, eine solche Identifikationskennung zu beantragen. In einem zweiten Schritt wird dann geprüft, ob es sich bei dem aktuellen Benutzer des Endgerätes auch wirklich um die Person handelt, die laut eingegebenen ersten Datensatz die persönliche Identifikationskennung beantragt. Beim zweiten Schritt kommt dabei insbesondere ein Identverfahren zum Einsatz, wobei der zweite Server auf die Kamera des Endgerätes zugreift und über die diese persönliche Dokumente, wie beispielsweise Reisepass oder Personalausweis scannt und gegebenenfalls diese mit einem Bild des Benutzers abgleicht.

Für einen besonders schnellen Abgleich der ersten Gruppe persönlicher Daten mit den Kundendaten eines Unternehmens greift der erste Server in vorteilhafter Ausgestaltung auf eine erste Datenbank zu, die vom Unternehmen gestellt und im ersten Server gespeichert wird oder aus Datenschutzgründen auf einem externen, vierten Server abgelegt ist, auf die beispielsweise über einen Webservice zugegriffen werden kann. Möglich ist auch, dass der vierte Server dem dritten Server entspricht, sodass die Datenbank auf dem dritten Server gespeichert ist. Für den Abgleich der zweiten Gruppe persönlicher Daten mit den Datensätzen einer zweiten Datenbank gelten die gleichen oben genannten Alternativen für den Speicherort der Datenbank. Dabei kann die zweite Datenbank aber auch identisch mit der ersten Datenbank sein oder aber die zweite Datenbank entspricht dem Datensatz der ersten Gruppe persönlicher Daten, was bedeutet, dass die zweite Gruppe persönlicher Daten mit der ersten Gruppe persönlicher Daten abgeglichen wird. Es wird in diesem Fall also geprüft, ob die bei der ersten Abfrage angegebenen persönlichen Daten mit der zweiten Abfrage, insbesondere über ein Identverfahren, übereinstimmen.

Da die vom Benutzer eingegebenen Daten oder die vom zweiten Server erfassten Daten nicht immer mit dem Datenformat oder der Schreibweise der Datensätze übereinstimmt, werden die erfassten Daten in bevorzugter Art und Weise vor dem Abgleich normalisiert. Das bedeutet insbesondere, dass Abkürzungen ausgeschrieben werden, Umlaute oder fremdsprachliche Buchstaben aufgelöst werden und die Schreibweise an die Vorgaben der Datenbank bzw. des Unternehmens angepasst wird. So wird vermieden, dass eine Anfrage nur deshalb fehlschlägt, weil die Daten in einem anderen Format hinterlegt sind oder eingebeben werden.

Um auch besonders hohe Sicherheitsvorgaben erfüllen zu können, initiiert der erste Server eine Generierung eines kryptographischen Schlüssels auf dem Endgerät, sobald auch die zweite Gruppe an persönlichen Daten positiv geprüft wurde und der Benutzer somit eindeutig identifiziert und berechtigt ist die persönliche Identifikationskennung zu beantragen und erhalten. Der kryptographische Schlüssel wird dabei auf dem Endgerät erstellt und durch ein vom Benutzer selbst gewähltes Passwort geschützt. Anschließend wird der öffentliche Schlüssel des kryptographischen Schlüssels an den ersten Server gesendet. Der erste Server prüft diesen öffentlichen Schlüssel, zertifiziert ihn zusammen mit Hard- und/oder Softwaremerkmalen des Endgerätes und/oder mit persönlichen Daten des Benutzers und speichert das Zertifikat in einer Datenbank des ersten Servers ab. Mit diesem Zertifikat bzw. mit diesem öffentlichen Schlüssel kann die zukünftige Kommunikation mit dem Benutzer und seinem Endgerät verschlüsselt gesendet werden. Dabei wird sichergestellt, dass die Verschlüsselung nur vom ursprünglich genutzten Endgerät empfangen bzw. geöffnet werden kann. Ein Wechsel des Endgerätes ist somit während der Anfrage der persönlichen Identifikationskennung nicht möglich.

Um auch die Kommunikation zwischen dem ersten Server und dem dritten Server besonders sicher zu gestalten, ist auch diese Kommunikation während der gesamten Zeit mit einer eigens für die Kommunikation vorgesehenen Verschlüsselung verschlüsselt. Der erste Server entschlüsselt somit die persönliche Identifikationskennung nach Erhalt vom dritten Server und verschlüsselt sie direkt anschließend im selben Verfahrensschritt mit dem öffentlichen Schlüssel des Benutzers. Somit wird sichergestellt, dass die persönliche Identifikationskennung zu keinem Zeitpunkt unverschlüsselt im ersten Server gespeichert ist.

Der Benutzer erhält in diesem Fall die persönliche Identifikationskennung verschlüsselt vom ersten Server und kann sie am Endgerät mit dem vorher vergebenen Passwort öffnen und einsehen. Um in Zukunft möglichst einfach und schnell auf die persönliche Identifikationskennung zugreifen zu können, kann in vorteilhafter Ausführung die persönliche Identifikationskennung auf Wunsch des Benutzers oder automatisch in verschlüsselter Form durch den öffentlichen Schlüssel des Benutzers auf dem ersten Server gespeichert werden. So kann der Benutzer bei Verwendung desselben Endgeräts in Zukunft, beispielsweise allein durch Eingabe ein paar weniger Identifizierungsdaten, die persönliche Identifikationskennung direkt vom ersten Server abrufen.

Die mit der Erfindung erzielten Vorteile bestehen insbesondere darin, dass durch die doppelte Prüfung der Identität über zunächst allgemeine Benutzer und Kundendaten und anschließend über ein Identverfahren, besonders hohe Sicherheitsvorgaben bei der Versendung von persönlichen Identifikationskennungen erfüllt werden können. Die Sicherheitsvorgaben werden weiter erhöht, in dem die Kommunikation verschlüsselt vorgenommen wird und auch Hard- und/oder Softwaremerkmale des Endgerätes mit geprüft werden.

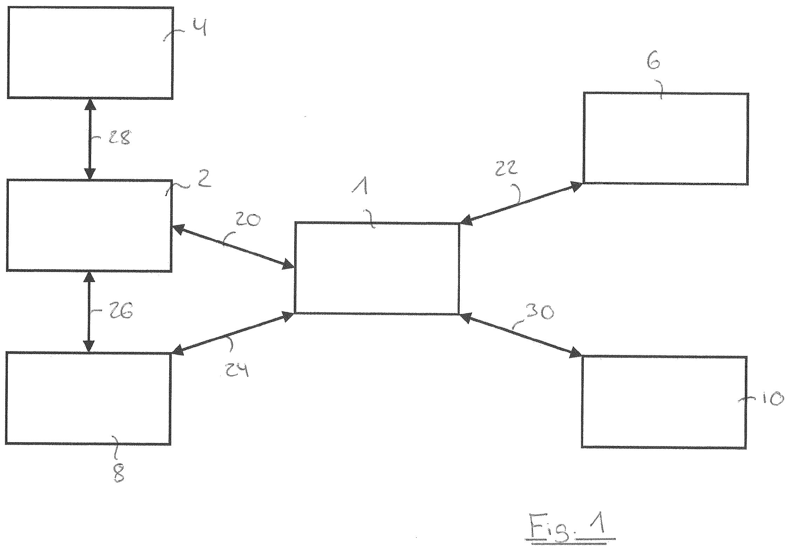

Ein Ausführungsbeispiel des Verfahrens zur Versendung einer persönlichen Identifikationskennung durch einen ersten Server wird in FIG. 1 anhand eines Blockschaltbildes beschrieben

Für die Verwendung einer Applikation eines Unternehmens auf einem Endgerät 2, beispielsweises ein mobiles Endgerät, wird vom Unternehmen in der Applikation die Eingabe einer persönlichen Identifikationskennung gefordert. Sollte diese persönliche Identifikationskennung dem Benutzer 4 nicht vorliegen, weil er beispielsweise die Applikation zum ersten Mal verwendet oder aber die Identifikationskennung vergessen hat, kann dieser die Zusendung einer neuen Identifikationskennung in der Applikation beantragen. Diese Beantragung wird durch einen ersten Server 1 verwaltet und durch diesen gesteuert.

In einem ersten Schritt fordert der erste Server 1 den Benutzer 4 über die Applikation 2 über den bidirektionalen Kommunikationsweg 20 auf einen ersten Satz von persönlichen Daten zur Identifizierung des Benutzers 4 einzugeben bzw. in sonstiger Form, beispielsweise durch Einbinden von Dokumenten oder bildliche Darstellung über eine angeschlossene Kamera am Endgerät 2, bereitzustellen. Dabei werden insbesondere benutzerspezifische Daten abgefragt, die ihn als Kunden des Unternehmens ausweisen. Dabei kann es sich beispielsweise um die Kundennummer, Vertragsnummern oder sonstige Benutzerdaten handeln. Ebenfalls werden durch die Applikation Hard- und/oder Software spezifische Daten zum Endgerät 2, des verwendeten Betriebssystems und der verwendeten Applikationsversion gesammelt. Diese Daten werden ebenfalls über den Kommunikationsweg 20 an den ersten Server 2 zur Prüfung übersendet. Dabei werden diese Daten zunächst in ein zur weiteren Verarbeitung vorgesehenes Format gebracht und normalisiert. Anschließend wird dieser erste Satz Daten durch den ersten Server 1 mit Datensätzen einer Datenbank abgeglichen, um zu prüfen, ob der Benutzer 4 bzw. Antragsteller berechtigt ist eine Anfrage zur Übersendung der persönlichen Identifikationskennung zu senden.

Die Datenbank kann dabei auf dem ersten Server 1 liegen, üblicherweise liegt diese aber auf einem externen Server 6, beispielsweise bei dem Unternehmen, von dem der Benutzer die persönliche Identifikationskennung beantragt. Bei der Übertragung des ersten Satzes persönlicher Daten an einen externen Server 6 über den bidirektionalen Kommunikationsweg 22 zur Überprüfung werden diese vorab verschlüsselt, um einen Zugriff Dritter auf diese Daten zu verhindern.

Bei erfolgter Prüfung und Feststellung, dass der Benutzer berechtigt ist eine persönliche Identifikationskennung zu beantragen, wird eine zweite Identifizierung des Benutzers 4 durch den ersten Server 1 initiiert. Diese zweite Identifizierung soll gewährleisten, dass es sich bei dem aktuellen Benutzer 4 des Endgeräts 2 auch um die Person handelt, für die dieser Benutzer4 die Daten im ersten Schritt eingeben hat. Dazu beantragt der erste Server 1 eine Identitätsüberprüfung bei einem zweiten Server 8 und übergibt ihm über einen bidirektionalen Kommunikationsweg 24 zumindest die im ersten Schritt erhaltenen Hard- und Softwaremerkmale des Endgerätes, damit der zweite Server 8 direkt mit dem Endgerät 2 kommunizieren kann. Dieser zweite Server 8 verbindet sich über einen bidirektionalen Kommunikationsweg 26 mit dem Endgerät 2 und nutzt im Weiteren die Möglichkeiten des Endgerätes 2, insbesondere die Kamera, um den Benutzer 4 zu identifizieren. Dies kann über den bidirektionalen Kommunikationsweg 28 durch Erfassen eines offiziellen Dokumentes, wie beispielsweise dem Personalausweis, Auswertung biometrischer Daten, wie beispielsweise eines Passbildes und/oder direkt über die Kamera aufgenommener Bilder und Videos von dem Benutzer und anderen Abfrage- und Erfassungsverfahren geschehen. Hat der zweite Server 8 den Benutzer 4 eindeutig identifiziert, leitet er diese Daten über den Kommunikationsweg 24 an den ersten Server 1 zur Überprüfung weiter. Auch der Datenaustausch über den Kommunikationsweg 24 kann beidseitig verschlüsselt erfolgen.

Der erste Server 1 normalisiert wiederum den zweiten Satz persönlicher Daten und prüft diesen auf Übereinstimmung mit dem ersten Satz elektronischer Daten und/oder auch mit den in den Datenbanken hinterlegten Datensätzen, ob die vom zweiten Server 8 ermittelte Person identisch mit dem Benutzer 4 ist, der die persönliche Identifikationskennung beantragt hat und beantragen darf. Sollte diese Prüfung positiv sein, leitet der erste Server 1 die Abfrage der persönlichen Identifikationskennung ein.

Zur Erhöhung der Sicherheit ergeht von dem ersten Server 1 über den Kommunikationsweg 20 an das Endgerät 2 die Aufforderung, eine sichere Umgebung zu generieren. Dazu werden kryptographische Schlüssel auf dem Endgerät erzeugt, die mit einem durch den Benutzer 4 zu vergebenden Passwort geschützt sind. Die zugehörigen öffentlichen Schlüssel werden in Verbindung mit den benutzer- und gerätespezifischen Daten an den ersten Server 1 gesendet, der diese Daten nochmals prüft und Zertifikate (signierte öffentliche Schlüssel mit Benutzer- und Gerätedaten) ausstellt. Die Zertifikate werden auf dem ersten Server 1 gespeichert und an das Endgerät 2 übermittelt.

Zur Abfrage der persönlichen Identifikationskennung übersendet der erste Server 1 zusammen mit einer spezifischen Kennung (z. B. Kundennummer, Krankenversichertennummer oder ICCSN) eine Anfrage über den bidirektionalen Kommunikationsweg 30 zum Abruf einer persönlichen Identifikationskennung an einen dritten Server 10. Dieser dritte Server 10 generiert eine persönlichen Identifikationskennung mit Hilfe einer speziellen sicheren Hardware (HSM - Hardware Security Modul) bzw. liest es aus einer speziell geschützten Datenbank des Unternehmens der Applikation für die die persönliche Identifikationskennung ausgestellt wird aus. Anschließend wird die Kennung für den ersten Server 1 verschlüsselt und zusammen mit der spezifischen Kennung an den ersten Server 1 gesendet. Der erste Server 1 entschlüsselt die persönliche Identifikationskennung und verschlüsselt diese im gleichen technischen Prozess sofort wieder für den Benutzer 4 anhand der Zertifikate, die im ersten Server 1 für diesen Benutzer hinterlegt sind.

Der erste Server 1 übersendet anschließend die verschlüsselte persönliche Identifikationskennung an die Applikation des Unternehmens auf dem Endgerät 2 des Benutzers 4, wobei nochmals überprüft wird, ob die Hard- und/oder Software spezifischen Daten übereinstimmen, um zu gewährleisten, dass die persönliche Identifikationskennung auch an die Applikation auf dem Endgerät 2 gesendet wird, von dem sie angefragt wird. Ein Wechsel der Endgeräte 2 während der Abfrage und Generierung der persönlichen Identifikationskennung ist somit durch den Benutzer 4 nicht möglich. Anschließend wird zur Entschlüsselung der persönlichen Identifikationskennung der entsprechende private Schlüssel benötigt. Um diesen zu nutzen, wird das vom Benutzer 4 vergebene Passwort abgefragt. Die persönliche Identifikationskennung wird entschlüsselt und dem Benutzer 4 zur weiteren Verwendung angezeigt und kann durch diesen für die spätere Verwendung der Applikation genutzt werden.

Die persönliche Identifikationskennung bleibt auch anschließend verschlüsselt auf dem ersten Server 1 gespeichert, sodass bei einer wiederholten Anfrage des Benutzers 4 dieser die persönliche Identifikationskennung direkt abfragen und mittels des vergebenen Passworts entschlüsseln kann. Erst bei Verlust oder Vergessen des gewählten Passwortes muss der Benutzer 4 eine neue persönliche Identifikationskennung beantragen und die doppelte Identifizierung seiner Person durchführen.

## Patentansprüche

1. Verfahren zur Versendung einer persönlichen Identifikationskennung durch einen ersten Server (1) mit folgenden Schritten:
- Abfrage einer ersten Gruppe persönlicher Daten des Empfängers (4) der persönlichen Identifikationskennung von einem Endgerät (2) durch den ersten Server (1),
- Abgleich der ersten Gruppe persönlicher Daten mit Datensätzen einer ersten Datenbank durch den ersten Server (1) zur Prüfung der Berechtigung des Empfängers (4) zum Erhalt einer persönlichen Identifikationskennung,
- bei positiver Prüfung der Berechtigung, Abfrage einer zweiten Gruppe persönlicher Daten des Empfängers (4) der persönlichen Identifikationskennung von einem zweiten Server (8),
- Abgleich der zweiten Gruppe persönlicher Daten mit Datensätzen einer zweiten Datenbank durch den ersten Server (1) zur Prüfung der Identität des Empfängers,
- Bei positiver Prüfung der Identität des Empfängers (4), Initiierung einer Generierung der persönlichen Identifikationskennung in einem dritten Server (10) durch den ersten Server (1),
- Empfang der generierten persönlichen Identifikationskennung vom dritten Server (10) durch den ersten Server (1),
- Versendung der generierten persönlichen Identifikationskennung vom ersten Server (1) an das Endgerät (2).

2. Verfahren zur Versendung einer persönlichen Identifikationskennung durch einen ersten Server (1) nach Anspruch 1, **dadurch gekennzeichnet, dass** die erste und/oder zweite Datenbank zum Abgleich der ersten und/oder zweiten Gruppe an persönlichen Daten in dem ersten Server (1) oder einem externen, vierten Server (6) hinterlegt ist.

3. Verfahren zur Versendung einer persönlichen Identifikationskennung durch einen ersten Server (1) nach einem der Ansprüche 1 oder 2, **dadurch gekennzeichnet, dass**
die ersten und/oder zweite Gruppe persönlicher Daten vor dem Abgleich mit einer Datenbank normalisiert wird.

4. Verfahren zur Versendung einer persönlichen Identifikationskennung durch einen ersten Server (1) nach einem der Ansprüche 1 bis 3, **dadurch gekennzeichnet, dass** der erste Server (1) nach positivem Abgleich der zweiten Gruppe persönlicher Daten die Generierung eines kryptographischen Schlüssels auf dem Endgerät (2) initiiert.

5. Verfahren zur Versendung einer persönlichen Identifikationskennung durch einen ersten Server (1) nach Anspruch 4, **dadurch gekennzeichnet, dass** der erste Server (1) den zum kryptographischen Schlüssel zugehörigen öffentlichen Schlüssel vom Endgerät (2) abruft, zertifiziert und am ersten Server (1) hinterlegt.

6. Verfahren zur Versendung einer persönlichen Identifikationskennung durch einen ersten Server (1) nach einem der Ansprüche 5, **dadurch gekennzeichnet, dass** der erste Server (1) die persönliche Identifikationskennung nach Empfang vom dritten Server (10) und vor Versendung an das Endgerät mit dem öffentlichen Schlüssel verschlüsselt.

7. Verfahren zur Versendung einer persönlichen Identifikationskennung durch einen ersten Server (1) nach einem der Ansprüche 1 bis 6, **dadurch gekennzeichnet, dass** die persönliche Identifikationskennung vom dritten Server (10) zum ersten Server (1) verschlüsselt übertragen wird.

8. Verfahren zur Versendung einer persönlichen Identifikationskennung durch einen ersten Server (1) nach einem der Ansprüche 1 bis 7, **dadurch gekennzeichnet, dass** der Empfänger (4) die persönliche Identifikationskennung nach Erhalt dieser zum wiederholten Abruf am ersten Server (1) hinterlegen kann.

9. Computerprogrammprodukt, umfassend Befehle, die bei der Ausführung des Programms durch einen Computer diesen veranlassen, das Verfahren nach einem der Ansprüche 1 bis 8 auszuführen.

10. Server, umfassend Mittel zur Ausführung eines Computerprogrammproduktes nach Anspruch 9.

## Claims

1. A method for sending a personal identification code by a first server (1) comprising the following steps:
- querying a first group of personal data of the recipient (4) of the personal identification code from a terminal device (2) by the first server (1);
- comparing the first group of personal data with data records of a first database by the first server (1), in order to verify the eligibility (4) of the recipient to receive a personal identification code;
- if eligibility is confirmed, querying a second group of personal data of the recipient (4) of the personal identification code from a second server (8);
- comparing the second group of personal data with data records of a second database by the first server (1), in order to verify the identity of the recipient;
- if the identity of the recipient (4) is confirmed, initiating the generation of the personal identification code on a third server (10) by the first server (1);
- receiving the generated personal identification code from the third server (10) by the first server (1);
- sending the generated personal identification code from the first server (1) to the terminal device (2).

2. The method for sending a personal identification code by a first server (1) according to Claim 1, **characterized in that** the first and/or second database for comparing the first and/or second group of personal data is stored in the first server (1) or in an external, fourth server (6).

3. The method for sending a personal identification code by a first server (1) according to any one of Claims 1 or 2, **characterized in that**
the first and/or second group of personal data is normalised prior to comparison with a database.

4. The method for sending a personal identification code by a first server (1) according to any one of Claims 1 to 3, **characterized in that** the first server (1), following successful comparison of the second group of personal data, initiates the generation of a cryptographic key on the terminal device (2).

5. The method for sending a personal identification code by a first server (1) according to Claim 4, **characterized in that** the first server (1) retrieves the public key associated with the cryptographic key from the terminal device (2), certifies it and stores it on the first server (1).

6. The method for sending a personal identification code by a first server (1) according to any one of the Claims 5, **characterized in that** the first server (1) encrypts the personal identification code with the public key after receiving it from the third server (10) and before sending it to the terminal device.

7. The method for sending a personal identification code by a first server (1) according to any one of Claims 1 to 6, **characterized in that** the personal identification code is transmitted from the third server (10) to the first server (1) in encrypted form.

8. The method for sending a personal identification code by a first server (1) according to any one of Claims 1 to 7, **characterized in that** the recipient (4) can store the personal identification code on the first server (1) after receiving it, for repeated retrieval.

9. A computer program product comprising commands which, when the program is executed by a computer, cause said computer to implement the method according to any one of Claims 1 to 8.

10. A server comprising means for executing a computer program product according to Claim 9.

## Revendications

1. Procédé d'envoi d'un code d'identification personnel par un premier serveur (1) comportant les étapes suivantes :
- interrogation d'un premier groupe de données personnelles du destinataire (4) du code d'identification personnel à partir d'un terminal (2) par le premier serveur (1),
- comparaison du premier groupe de données personnelles avec les jeux de données d'une première base de données par le premier serveur (1) pour vérifier l'autorisation du destinataire (4) à recevoir un code d'identification personnel,
- si l'autorisation est vérifiée positivement, interrogation d'un deuxième groupe de données personnelles du destinataire (4) du code d'identification personnel auprès d'un deuxième serveur (8),
- comparaison du deuxième groupe de données personnelles avec les jeux de données d'une deuxième base de données par le premier serveur (1) pour vérifier l'identité du destinataire,
- si l'identité du destinataire (4) est vérifiée positivement, lancement d'une génération du code d'identification personnel dans un serveur tiers (10) par le premier serveur (1),
- réception du code d'identification personnel généré par le serveur tiers (10) par le premier serveur (1),
- envoi du code d'identification personnel généré depuis le premier serveur (1) vers le terminal (2).

2. Procédé d'envoi d'un code d'identification personnel par un premier serveur (1) selon la revendication 1, **caractérisé en ce que**
la première et/ou la deuxième base de données permettant de comparer le premier et/ou le deuxième groupe de données personnelles est stockée dans le premier serveur (1) ou dans un quatrième serveur externe (6).

3. Procédé d'envoi d'un code d'identification personnel par un premier serveur (1) selon une des revendications 1 ou 2, **caractérisé en ce que**
le premier et/ou le deuxième groupe de données personnelles est normalisé avant d'être comparé à une base de données.

4. Procédé d'envoi d'un code d'identification personnel par un premier serveur (1) selon une des revendications 1 à 3, **caractérisé en ce que** le premier serveur (1) lance la génération d'une clé cryptographique sur le terminal (2) après comparaison positive du deuxième groupe de données personnelles.

5. Procédé d'envoi d'un code d'identification personnel par un premier serveur (1) selon la revendication 4, **caractérisé en ce que**
le premier serveur (1) récupère du terminal (2) la clé publique associée à la clé cryptographique, la certifie et la dépose sur le premier serveur (1).

6. Procédé d'envoi d'un code d'identification personnel par un premier serveur (1) selon une des revendications 5, **caractérisé en ce que**
le premier serveur (1) crypte le code d'identification personnel avec la clé publique après l'avoir reçu du serveur tiers (10) et avant de l'envoyer au dispositif terminal.

7. Procédé d'envoi d'un code d'identification personnel par un premier serveur (1) selon une des revendications 1 à 6, **caractérisé en ce que** le code d'identification personnel est transmis du serveur tiers (10) au premier serveur (1) sous forme cryptée.

8. Procédé d'envoi d'un code d'identification personnel par un premier serveur (1) selon une des revendications 1 à 7, **caractérisé en ce que** le destinataire (4) peut déposer le code d'identification personnel sur le premier serveur (1) pour une récupération répétée après sa réception.

9. Produit de programme informatique comprenant des instructions qui, lorsqu'elles sont exécutées par un ordinateur, amènent l'ordinateur à exécuter le procédé selon une des revendications 1 à 8.

10. Serveur, comprenant des moyens pour exécuter un produit de programme informatique selon la revendication 9.
